(19) Europäisches Patentamt
European Patent Office
Office européen des brevets

(11) **EP 3 475 742 B1**

(12) **FASCICULE DE BREVET EUROPEEN**

(45) Date de publication et mention de la délivrance du brevet:
**04.05.2022 Bulletin 2022/18**

(21) Numéro de dépôt: **17740302.9**

(22) Date de dépôt: **27.06.2017**

(51) Classification Internationale des Brevets (IPC):
**G02B 6/13** *(2006.01)*

(52) Classification Coopérative des Brevets (CPC):
**G02B 6/13**

(86) Numéro de dépôt international:
**PCT/EP2017/065871**

(87) Numéro de publication internationale:
**WO 2018/002061 (04.01.2018 Gazette 2018/01)**

(54) **PROCÉDÉS ET SYSTÈMES DE FONCTIONNALISATION OPTIQUE D'UN ÉCHANTILLON EN MATÉRIAU SEMI-CONDUCTEUR**

**VERFAHREN UND SYSTEME ZUR OPTISCHEN FUNKTIONALISIERUNG EINER PROBE AUS HALBLEITERMATERIAL**

**METHODS AND SYSTEMS FOR OPTICAL FUNCTIONALISATION OF A SAMPLE MADE OF SEMICONDUCTOR MATERIAL**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.06.2016 FR 1655979**

(43) Date de publication de la demande:
**01.05.2019 Bulletin 2019/18**

(73) Titulaires:
• **Université d'Aix Marseille**
**13284 Marseille Cedex 07 (FR)**
• **Centre National de la Recherche Scientifique**
**75794 Paris Cedex 16 (FR)**

(72) Inventeurs:
• **GROJO, David**
**13012 Marseille (FR)**
• **CHAMBONNEAU, Maxime**
**13006 Marseille (FR)**

(74) Mandataire: **Osha Liang**
**2, rue de la Paix**
**75002 Paris (FR)**

(56) Documents cités:
WO-A1-2008/113165    JP-A- 2001 311 847
US-A1- 2001 021 293    US-A1- 2002 076 655

• **TURNALI A. ET AL: "Direct laser writing of volume Fresnel zone plates in silicon", 2015 EUROPEAN CONFERENCE ON LASERS AND ELECTRO-OPTICS - EUROPEAN QUANTUM ELECTRONICS CONFERENCE; MUNICH GERMANY; 21-25 JUNE 2015, no. CM_4_5, 25 June 2015 (2015-06-25), - 25 June 2015 (2015-06-25), page 1, XP055806212, US ISBN: 978-1-4673-7475-0 Retrieved from the Internet: URL:https://www.osapublishing.org/abstract .cf m?URI=CLEO_Europe-2015-CM_4_5>**
• **Tokel Onur ET AL: "Laser writing deep inside silicon for 3D information Processing", , 9 September 2014 (2014-09-09), XP055806119, Retrieved from the Internet: URL:https://arxiv.org/pdf/1409.2827v1.pdf [retrieved on 2021-05-20]**
• **Verburg P. C. ET AL: "Two-photon–induced internal modification of silicon by erbium-doped fiber laser", Optics Express, vol. 22, no. 18, 8 September 2014 (2014-09-08), pages 21958-225, XP055806111, DOI: 10.1364/OE.22.021958 Retrieved from the Internet: URL:https://www.osapublishing.org/DirectPD FAccess/3D1FF800-011F-412B-8586B656C07E3 D7 C_300701/oe-22-18-21958.pdf?da=1&id=300701 &seq=0&mobile=no>**

• MIURA K ET AL: "Photowritten optical waveguides in various glasses with ultrashort pulse laser", APPLIED PHYSICS LETTERS, AMERICAN INSTITUTE OF PHYSICS, 2 HUNTINGTON QUADRANGLE, MELVILLE, NY 11747, vol. 71, no. 23, 8 December 1997 (1997-12-08), pages 3329-3331, XP012019205, ISSN: 0003-6951, DOI: 10.1063/1.120327
• PAVLOV IHOR ET AL: "Optical waveguides written deep inside silicon by femtosecond laser", 2017 CONFERENCE ON LASERS AND ELECTRO-OPTICS EUROPE & EUROPEAN QUANTUM ELECTRONICS CONFERENCE (CLEO/EUROPE-EQEC), IEEE, 25 June 2017 (2017-06-25), page 1, XP033240154, DOI: 10.1109/CLEOE-EQEC.2017.8087237 [retrieved on 2017-10-26]

## Description

ETAT DE L'ART

### Domaine technique de l'invention

La présente invention concerne des procédés et systèmes de fonctionnalisation optique en profondeur d'un échantillon en matériau semi-conducteur, comprenant notamment l'inscription tridimensionnelle de guides d'onde optiques en profondeur dans l'échantillon.

### Etat de l'art

L'émergence des sources laser femtoseconde a permis de développer des technologies bien maitrisées d'écriture laser directe en 3D dans les matériaux diélectriques transparents comme le verre, notamment pour des applications de « fonctionnalisation optique » du matériau, notamment par inscription de guides d'onde optiques. La fonctionnalisation optique est obtenue par variation contrôlée de la partie réelle de l'indice de réfraction dans les matériaux diélectriques (voir par exemple K. M. Davis et al. « Writing waveguides in glass with a femtosecond laser », Opt. Letters, Vol. 21, N°21 (1996)). L'écriture laser dans des matériaux diélectriques transparents est également décrite dans la demande de brevet WO 2008113165.

Cependant à ce jour, aucune technologie de fonctionnalisation optique similaire à celles connues pour les matériaux diélectriques n'a été démontrée dans le volume des matériaux semi-conducteurs monolithiques, et notamment dans le silicium.

Ceci s'explique principalement par l'émergence et la généralisation seulement très récentes des sources ultra-brèves dans l'infrarouge, que ce soit les amplificateurs paramétriques optiques (ou OPA selon l'expression anglo-saxonne « Optical Parametric Amplifier) ou les lasers à fibres. Cela s'explique aussi par l'importance des effets non-linéaires lors de la propagation et de l'absorption de la lumière dans les matériaux semi-conducteurs, qui limitent intrinsèquement le dépôt d'énergie par laser femtoseconde à un niveau insuffisant pour la modification des matériaux (voir par exemple A. Mouskeftaras et al. « Self-limited underdense microplasmas in bulk silicon induced by ultrashort laser pulses », Appl. Phys. Lett. 105, 191103 (2014)). Cet effet d'auto-protection du silicium a été très récemment expliqué par une défocalisation induite des faisceaux infrarouges par le plasma formé lors de l'interaction (E. V. Zavedeev et al. « Delocalization of femtosecond laser radiation in crystalline Si in the mid-IR range », Laser Phys. 26, 016101 (2015))

Des techniques pour la fonctionnalisation optique dans les semi-conducteurs se sont développées, comme par exemple la technologie dite « Silicium sur Isolant » ou « SOI » selon l'expression anglo-saxonne « Silicon On Insulator », dans laquelle une couche de silicium cristallin structurée en surface est prise en sandwich entre une couche en matériau isolant enterrée et une couche supérieure de bas indice (ou l'air). On obtient ainsi une propagation des ondes électromagnétiques dans les guides d'onde grâce à un mécanisme de réflexion totale interne (voir par exemple M. Lipson et al. « Guiding, modulating and emitting light on silicon - challenges and opportunities », Journal of Lightwave Technology, Vol. 23, N°12 (2005)). Bien que la technologie SOI permette d'obtenir d'excellentes performances optiques, elle présente néanmoins des inconvénients majeurs, propres à la lithographie. Un premier inconvénient est que les guides d'onde fabriqués sont contenus dans un plan (i.e., 2D), ce qui empêche la conception d'architectures tridimensionnelles pour la fonctionnalisation optique du matériau. Un deuxième inconvénient est que cette technique requiert plusieurs étapes dans un environnement propre et contrôlé afin de s'affranchir des problèmes liés à une pollution extérieure indésirable. La mise à disposition d'une technologie d'écriture laser directe permettrait de s'affranchir de ces limitations.

Des travaux ont été publiés visant à l'inscription directe de guides d'ondes optiques dans les matériaux semi-conducteurs (voir par exemple la demande de brevet publiée US 2012/0268939). O. Tokel et al : « Laser-Writing deep inside Silicon for 3D Information Processing », arxiv.org/pdf/1409.2827 et A. Turnali et al : « Direct Laser Writing of Volume Fresnel Zone Plates in Silicon », 2015 European Conférence on Lasers and Electro-Optics - European Quantum Electronics Conférence ; Munich Germany ; 21-25 June 2015, no. CM_4_5 décrivent une technique permettant l'inscription directe de guides d'onde optiques en profondeur dans un matériau semi-conducteur, ce qui a ouvert la porte à la fonctionnalisation optique par écriture laser directe en 3D dans les matériaux semi-conducteurs, et notamment dans le silicium.

Un objet de l'invention est de proposer des procédés et systèmes de fonctionnalisation optique par inscription laser directe en profondeur dans un échantillon en matériau semi-conducteur qui soit fiable et reproductible.

RESUME DE L'INVENTION

Selon un premier aspect, la présente invention telle que définie par la revendication 1 concerne un procédé de fonctionnalisation optique en profondeur d'un échantillon en matériau semi-conducteur, comprenant :

-   l'émission d'un faisceau laser formé d'impulsions de durées effectives comprises entre 1 ps et 100 ns, présentant une longueur d'onde dans la bande spectrale de transparence du matériau;

-   la focalisation en profondeur dans l'échantillon du faisceau laser, selon un motif prédéterminé, l'intensité lumineuse par impulsion dans un volume de focalisation du faisceau laser étant adaptée à la génération d'une absorption multi-photonique;

- la mesure de la partie réelle de l'indice de réfraction de l'échantillon en chaque point du motif ;
- le contrôle du nombre d'impulsions reçues par point du motif, ou « nombre de tirs », en fonction de ladite mesure de la partie réelle de l'indice de réfraction de telle sorte à obtenir, en chaque point du motif, une modification progressive de la partie réelle de l'indice de réfraction du matériau jusqu'à une variation relative de la partie réelle de l'indice de réfraction supérieure à $10^{-3}$ en valeur absolue.

La fonctionnalisation optique s'entend, dans la présente description, comme l'inscription au sein du matériau de fonctions optiques résultant d'une variation locale de la partie réelle de l'indice de réfraction, avec modification faible ou nulle de la partie imaginaire (variation relative inférieure à $10^{-3}$). Les fonctions optiques inscrites sont aptes de façon générale à modifier au sein du matériau des propriétés spatiales, temporelles ou spectrales de la lumière, et comprennent, de façon non-limitative, le guidage d'une onde lumineuse, la modification de la polarisation d'une onde lumineuse, la modification du front d'une onde lumineuse (notamment par inscription d'une ou plusieurs microlentilles), le filtrage spectral (notamment par inscription de réseaux de diffraction, par exemple des réseaux de Bragg).

Ainsi, selon l'un ou plusieurs exemples de réalisation, le motif est déterminé pour la formation d'au moins l'un des éléments optiques suivants : guide d'onde, micro lentille, réseau de diffraction, lame séparatrice, filtre optique, lame d'onde et plus généralement tout micro-dispositif optique basé sur une distribution d'indice maitrisée dans le volume du matériau.

Les déposants ont montré que le procédé ainsi décrit permet, grâce au contrôle de la variation de la partie réelle ($n$) de l'indice de réfraction, de ne pas dépasser des variations relatives ($\Delta n/n$) de la partie réelle de l'indice de réfraction au-delà desquelles on considère qu'il y a endommagement du matériau, notamment par formation de microcavités, et non plus inscription d'une fonction optique. Typiquement, on cherchera à limiter la variation relative $\Delta n/n$ de la partie réelle de l'indice de réfraction à une valeur inférieure à 0,1 en valeur absolue.

Selon un ou plusieurs exemples de réalisation, le contrôle du nombre de tirs permet d'obtenir une variation relative positive de la partie réelle de l'indice de réfraction. Une variation relative positive de la partie réelle de l'indice de réfraction résulte d'une modification structurelle de la matière (densification, amorphisation,...) et permet notamment la formation des guides d'ondes, réseaux de diffraction, microlentilles et tout autre élément optique défini par une variation positive de l'indice de réfraction.

Selon un ou plusieurs exemples de réalisation, le contrôle du nombre de tirs permet d'obtenir une variation relative négative de la partie réelle de l'indice de réfraction, sans que cette variation ne dépasse 0,1 en valeur absolue, avantageusement 0,01. Une variation relative négative de la partie réelle de l'indice de réfraction peut résulter d'un changement de l'état cristallin, ou de la formation de nano-cavités ou « nanocracks », de dimensions inférieures au dixième de la longueur d'onde pour ne pas introduire de défauts optiques, et permet notamment la formation de lentilles, lames d'onde, guides d'ondes définis par une couronne d'indice de réfraction inférieur à une partie centrale, et tout autre élément optique défini par une variation négative de l'indice de réfraction.

Les déposants ont par ailleurs montré que le procédé ainsi décrit permet, grâce au contrôle de la variation de la partie réelle de l'indice de réfraction le long du motif, d'obtenir une fonctionnalisation optique avec d'excellentes performances optiques, grâce à une limitation des défauts optiques qui résulterait d'inhomogénéités spatiales de la partie réelle ou de la partie imaginaire de l'indice de réfraction. Des inhomogénéités spatiales de la partie réelle ou de la partie imaginaire de l'indice de réfraction peuvent être définies comme des inhomogénéités susceptibles d'introduire des phénomènes de diffusion de la lumière. Typiquement, elles résultent de variations locales de l'indice de réfraction (partie réelle ou partie imaginaire) supérieures à $10^{-3}$ en valeur absolue, dans des volumes dont une dimension au moins est supérieure au dixième de la longueur d'onde (longueur d'onde à laquelle le matériau fonctionnalisé est destiné à être utilisé).

La bande spectrale de transparence du matériau semi-conducteur est définie en fonction de l'énergie de bande interdite. Plus précisément, on considère dans la présente description qu'une longueur d'onde $\lambda$ appartient à la bande spectrale de transparence si la longueur d'onde vérifie $\lambda > 0,8\ hc/\Delta$ où $h$ est la constante de Planck, $c$ est la vitesse de la lumière dans le vide et $\Delta$ est l'énergie de bande interdite du matériau (ou « band gap », ou plus simplement « gap » selon l'expression anglo-saxonne); le facteur 0,8 permet d'assurer dans tous les cas une pénétration optique nécessaire pour travailler sous la surface.

Le procédé décrit s'applique à tous les semi-conducteurs à bandes interdites (ou « gaps ») directes ou indirectes, amorphes ou cristallins, en ajustant la longueur d'onde des impulsions pour satisfaire la relation précédemment donnée.

Selon un ou plusieurs exemples de réalisation, chaque impulsion est formée d'une impulsion unique de durée comprise entre 1 ps et 100 ns. Selon d'autres exemples de réalisation, chaque impulsion est formée d'un train d'impulsions ultra-brèves (c'est-à-dire strictement inférieures à 1 ps), la durée du train d'impulsions correspondant à la somme des durées de toutes les impulsions ultra-brèves dans le train et étant comprise entre 1 ps et 100 ns. Dans la suite de la description, on parlera simplement d' « impulsion », que l'impulsion soit formée d'une impulsion unique ou d'un train d'impulsions ultra-brèves.

L'intensité *I* d'une impulsion est définie par

$$I = \frac{2E}{\tau \pi w_0^2}$$

où *E* est l'énergie de l'impulsion, $\tau$ la largeur temporelle à mi-hauteur et $w_0$ le rayon de la tache focale, mesuré à $1/e^2$ de la courbe de répartition spatiale de l'énergie, dans le cas d'un faisceau gaussien.

Lorsque l'impulsion est formée d'un train d'impulsions ultra-brèves, la largeur temporelle considérée est égale à la somme des largeurs temporelles à mi-hauteur des impulsions ultra-brèves formant le train d'impulsions et l'énergie considérée est égale à la somme des énergies des impulsions ultra-brèves formant le train d'impulsions.

Dans la suite de la description, on pourra parler indifféremment d'énergie ou d'intensité lumineuse de l'impulsion à partir du moment où sont fixées la durée des impulsions et la géométrie du faisceau.

Selon un ou plusieurs exemples de réalisation, les impulsions sont émises avec un taux de répétition donné inférieur à 100 kHz, avantageusement inférieur à 10 kHz. Avec un taux de répétition des impulsions suffisamment faible, on s'assure de limiter l'accumulation de chaleur en un point du motif et on limite les risques d'endommagement du matériau se traduisant par des microcavités.

Selon un ou plusieurs exemples de réalisation, le procédé comprend en outre la mise en forme spatiale des impulsions.

Selon un ou plusieurs exemples de réalisation, le procédé comprend en outre le déplacement relatif du faisceau laser et de l'échantillon, le long dudit motif, à une vitesse de balayage donnée.

Selon un ou plusieurs exemples de réalisation, les impulsions sont émises avec un taux de répétition encore inférieur, par exemple entre 100 Hz et 5 kHz, compatible avec des vitesses de déplacement relatif du faisceau et de l'échantillon obtenues par des moyens de déplacement courant.

Selon un ou plusieurs exemples de réalisation, le contrôle du nombre d'impulsions reçues par point du motif comprend le contrôle d'un taux de répétition des impulsions et/ou le contrôle d'une vitesse de balayage du faisceau laser dans l'échantillon et/ou le contrôle d'une dimension du volume de focalisation. En pratique, cette dimension peut être la longueur de focalisation ou « distance de Rayleigh », dans le cas d'une inscription faite par déplacement relatif du faisceau optique selon un axe parallèle à l'axe optique du faisceau laser (« écriture longitudinale »). La longueur de focalisation est généralement définie comme la longueur de la zone dans laquelle le rayon du faisceau est inférieur a $\sqrt{2}w_0$. Cette dimension peut être égale à 2 fois le rayon de la tache focale ($2w_0$) dans le cas d'une inscription faite par déplacement relatif du faisceau optique selon un axe perpendiculaire à l'axe optique du faisceau laser (« écriture transversale »).

Selon un ou plusieurs exemples de réalisation, le procédé comprend en outre le contrôle de l'intensité lumineuse par impulsion dans le volume de focalisation pour obtenir la modification progressive de la partie réelle de l'indice réfraction du matériau.

Par rapport à un contrôle direct du nombre de tirs en un point du motif, le balayage à vitesse donnée d'impulsions émises à un taux de répétition donné permet d'obtenir une meilleure homogénéité de la variation de la partie réelle de l'indice.

Selon un ou plusieurs exemples de réalisation, le contrôle du nombre d'impulsions comprend :

- une première étape de contrôle du nombre d'impulsions reçues par point du motif pour atteindre une première variation relative de la partie réelle de l'indice de réfraction;
- au moins une deuxième étape de contrôle du nombre d'impulsions reçues par point du motif pour atteindre une deuxième variation relative de la partie réelle de l'indice de réfraction;
- une itération de ladite deuxième étape jusqu'à l'obtention d'une variation relative de la partie réelle de l'indice de réfraction supérieure ou égale à une valeur prédéterminée, ladite valeur prédéterminée étant supérieure à $10^{-3}$ en valeur absolue.

Les déposants ont montré qu'un procédé par itération permet un contrôle très fin de la variation de la partie réelle de l'indice de réfraction, garantissant une très bonne homogénéité des variations d'indice et de ce fait d'excellentes performances dans les fonctions optiques réalisées.

Selon un ou plusieurs exemples de réalisation, la première et la deuxième variation relative de la partie réelle de l'indice de réfraction correspondent à la plus petite variation détectable de la partie réelle de l'indice de réfraction. En choisissant le seuil de détectabilité de la variation de la partie réelle de l'indice comme valeurs des premières et deuxième variations relatives de la partie réelle de l'indice de réfraction, on évite de devoir faire une étude préalable du matériau.

Selon un ou plusieurs exemples de réalisation, le procédé comprend en outre une augmentation progressive de l'intensité lumineuse par impulsion dans le volume de focalisation, à partir d'une valeur minimale prédéterminée, au cours de chaque étape.

Selon un ou plusieurs exemples de réalisation, le procédé comprend en outre une augmentation de l'intensité lumineuse par impulsion dans le volume de focalisation, à partir d'une valeur minimale prédéterminée, lors du passage d'une étape à une étape ultérieure.

Dans l'un et l'autre de ces exemples de réalisation, la modification progressive de l'intensité lumineuse par impulsion permet d'accéder à une plus grande finesse dans la variation de la partie réelle de l'indice de réfraction et de limiter ainsi tout risque d'endommagement.

Selon un ou plusieurs exemples de réalisation, le procédé comprend en outre une phase préalable d'étalonnage.

Cette phase préalable d'étalonnage permet de déterminer, pour un matériau en semi-conducteur donné, des plages de paramètres à l'intérieur desquelles le procédé peut être mis en œuvre en fonction des conditions opérationnelles. Par exemple, pour des impulsions de durée effective donnée, émises à un taux de répétition donné, et pour une géométrie de faisceau donnée, on pourra déterminer des plages de valeurs pour des vitesses de balayage et/ou des énergies par impulsion.

Selon un ou plusieurs exemples de réalisation, la phase préalable détalonnage comprend également la détermination de la polarisation du faisceau laser l'illumination en fonction de la ou des fonctions optiques recherchée(s).

Ainsi pour la fonctionnalisation optique notamment du silicium, les déposants ont mis en évidence des plages de paramètres optimales pour l'inscription de fonctions optiques telles que les guides d'onde, ces paramètres pouvant être combinés indifféremment les uns avec les autres :

- durée d'impulsion comprise entre 1 et 10 ns ;
- longueur d'onde des impulsions supérieure à 1,1 $\mu$m, par exemple autour de 1,55 $\mu$m
- diamètre du faisceau inférieur à 10 $\mu$m ;
- taux de répétition compris entre 100 Hz et 5 kHz, par exemple autour de 1 kHz ;
- vitesse de balayage du déplacement relatif du faisceau laser entre 0,01 et 0,5 mm/s, par exemple autour de 0,1 mm/s ;
- Intensité lumineuse d'une impulsion laser dans le volume de focalisation supérieure à 4 GW/cm$^2$, ce qui correspond à une énergie par impulsion supérieure à 0,5 $\mu$J pour un diamètre du faisceau de 2,3 $\mu$m et une durée d'impulsion de 5 ns.

Selon un ou plusieurs exemples de réalisation, le procédé comprend en outre une mesure de la partie imaginaire de l'indice de réfraction, permettant de vérifier que la valeur de la variation relative de la partie imaginaire de l'indice de réfraction reste inférieure à 10$^{-3}$ en valeur absolue.

Selon un deuxième aspect, la présente description concerne des dispositifs pour la mise en œuvre des procédés selon le premier aspect.

Selon un deuxième aspect, l'invention comme définie par la revendication 13 concerne un système pour la fonctionnalisation optique en profondeur d'un échantillon en matériau semi-conducteur, comprenant :

- une source d'émission d'un faisceau laser formé d'impulsions de durées effectives comprises entre 1 ps et 100 ns, présentant une longueur d'onde dans la bande spectrale de transparence du matériau;

- un objectif de microscope pour la focalisation en profondeur dans l'échantillon du faisceau laser selon un motif prédéterminé, l'intensité lumineuse par impulsion dans un volume de focalisation du faisceau laser étant adaptée pour la génération d'une absorption multi-photonique dans le matériau semi-conducteur;

- un dispositif de mesure de la partie réelle de l'indice de réfraction de l'échantillon en chaque point du motif ;

- une unité de contrôle du nombre d'impulsions reçues par point du motif, ou « nombre de tirs », en fonction de ladite mesure de la partie réelle de l'indice de réfraction de telle sorte à obtenir, en chaque point du motif, une modification progressive de la partie réelle de l'indice de réfraction du matériau jusqu'à une variation relative de la partie réelle de l'indice de réfraction supérieure à 10$^{-3}$ en valeur absolue.

Selon un ou plusieurs exemples de réalisation, le système comprend en outre des moyens de déplacement relatifs du volume de focalisation et de l'échantillon pour la focalisation du faisceau laser selon le motif prédéterminé.

Selon un ou plusieurs exemples de réalisation, le dispositif de mesure est un microscope de phase.

Selon un ou plusieurs exemples de réalisation, le dispositif de mesure comprend un microscope à fond noir.

Selon un ou plusieurs exemples de réalisation, le dispositif de mesure permet en outre une mesure de la partie imaginaire de l'indice de réfraction.

BREVE DESCRIPTION DES DESSINS

D'autres avantages et caractéristiques de l'invention apparaîtront à la lecture de la description, illustrés par les figures suivantes :

- FIG. 1A, un schéma illustrant un exemple de système d'inscription laser pour la fonctionnalisation optique en profondeur dans un matériau semi-conducteur, selon la présente description, FIG. 1B un exemple de module adapté à la mise en forme spatiale des impulsions et FIG. 1C des images illustrant le profil spatial des impulsions respectivement sans mise en forme (a), avec mise en forme dans l'air (b, c) et avec mise en forme dans un échantillon (d, e);

- FIG. 2, un schéma illustrant selon un exemple un premier sous-système d'un système d'inscription laser selon la présente description, pour la modification de la partie réelle de l'indice de réfraction dans le matériau semi-conducteur;

- FIG. 3, un schéma illustrant selon un exemple un deuxième sous-système d'un système d'inscription laser selon la présente description, pour la mesure de la partie réelle de l'indice de réfraction dans le matériau semi-conducteur ;

- FIGS. 4A à 4C, des résultats expérimentaux montrant l'influence de l'énergie par impulsion pour différentes vitesses de balayage du faisceau laser et FIG. 4D une courbe expérimentale illustrant la largeur d'un guide d'onde obtenu en fonction de l'énergie par impulsion ;

- FIGS. 5A à 5J, des résultats expérimentaux montrant l'influence de la vitesse de balayage du faisceau laser ;

- FIG. 6, des résultats expérimentaux montrant la variation de phase induite pour différentes vitesses de balayage du faisceau laser ;

- FIG. 7A, un exemple de procédure expérimentale avec rétroaction sur le dispositif permettant d'irradier le matériau jusqu'à obtenir une modification nécessaire et suffisante au guidage de la lumière, et FIG. 7B, des résultats expérimentaux montrant la variation d'indice induite à vitesse de balayage constante, et pour différents cycles d'augmentation de l'énergie par impulsion ;

- FIGS. 8A et 8B, des résultats expérimentaux montrant la propagation de la lumière dans un guide d'onde élémentaire obtenu par un procédé selon la présente description, dans le silicium, la lumière étant injectée dans la direction du guide d'onde ;

- FIGS. 9A et 9B, des résultats expérimentaux montrant la propagation de la lumière dans un guide d'onde élémentaire obtenu par un procédé selon la présente description, dans le silicium, la lumière étant injectée avec un angle non-nul par rapport à la direction du guide d'onde ;

- FIGS. 10A et 10B, des résultats expérimentaux montrant la propagation de la lumière dans des coupleurs en Y obtenus par un procédé selon la présente description, dans le silicium, pour différents angles du coupleur.

DESCRIPTION DETAILLEE

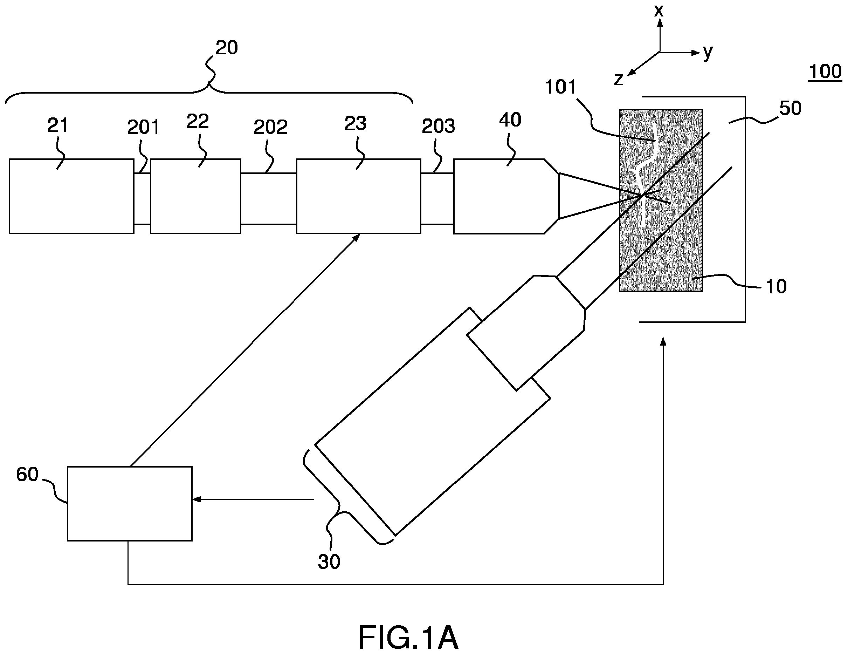

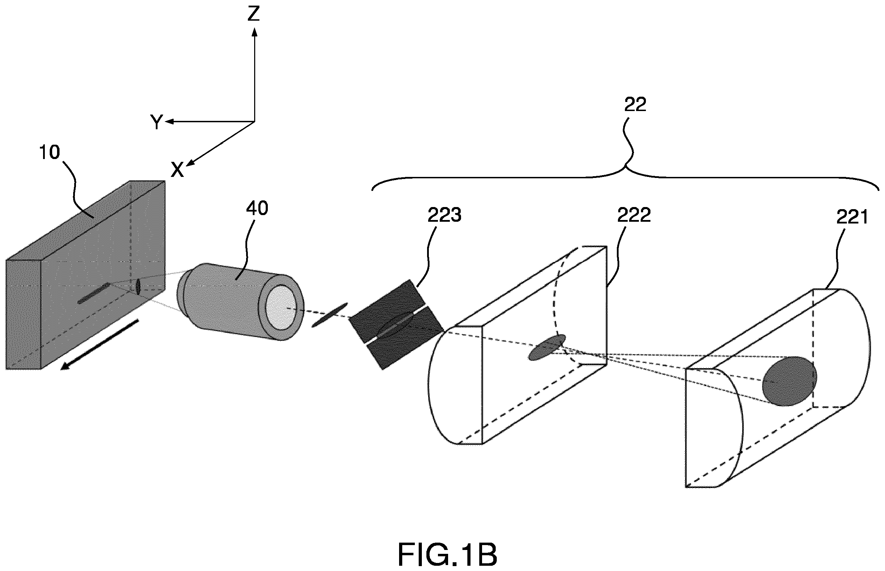

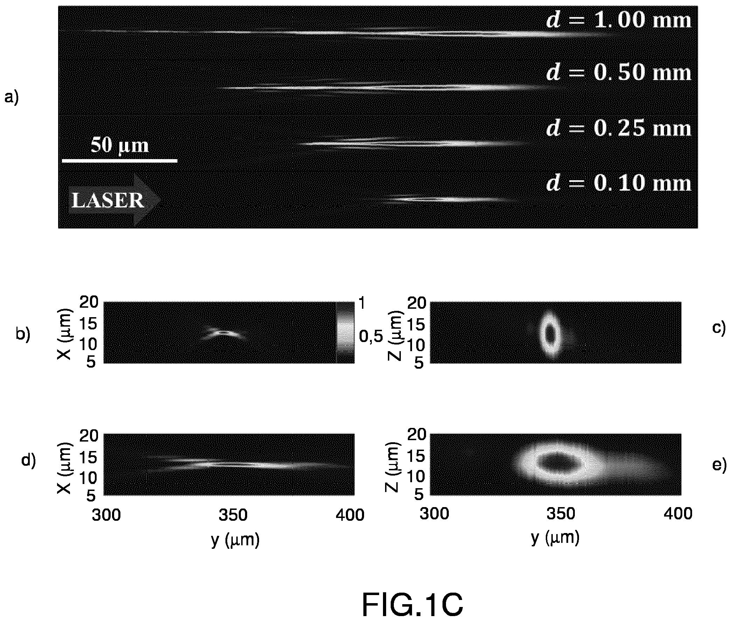

La FIG 1 illustre un premier exemple d'un système d'inscription laser 100 pour la fonctionnalisation optique en profondeur dans un échantillon 10 en matériau semi-conducteur, selon la présente description.

Le système d'inscription laser 100 comprend notamment une source d'émission 20 d'un faisceau laser 203 formé d'impulsions et un système de focalisation 40 pour la focalisation en profondeur dans l'échantillon du faisceau laser (par exemple un objectif de microscope, une lentille convergente, un miroir parabolique, etc.). Le volume de focalisation ainsi formé peut être déplacé en profondeur dans l'échantillon selon un motif 101 grâce à des moyens de déplacement relatifs 50 du faisceau laser et de l'échantillon. Dans l'exemple de la FIG. 1A, les moyens de déplacement relatifs 50 comprennent une platine de déplacement de l'échantillon selon les 3 axes X, Y, Z. Chacune des translations peut cependant être remplacée par un dispositif optique adapté au déplacement du faisceau, par exemple une lentille dite « lentille f-thêta ». Le système 100 comprend par ailleurs un dispositif de mesure 30 de la partie réelle de l'indice de réfraction dans l'échantillon et une unité de contrôle 60 du nombre d'impulsions reçues par point du motif, ou « nombre de tirs », en fonction de la mesure de la partie réelle de l'indice de réfraction.

Plus précisément, dans l'exemple de la FIG. 1A, la source d'émission 20 comprend une source laser impulsionnelle 21 adaptée à émettre des premières impulsions 201 de longueur d'onde comprise dans la bande spectrale de transparence du matériau, un module 22 (optionnel) de mise en forme temporelle et/ou spatiale des impulsions délivrées par la source impulsionnelle 21 et un module 23 de contrôle de l'énergie.

Le module 22 de mise en forme des impulsions comprend par exemple des moyens de mise en forme temporelle des impulsions. Le module 22 comprend par exemple un dispositif mécanique (par exemple un obturateur), électro-optique (par exemple une cellule de Pockels et un polariseur), ou acousto-optique pour « découper » une succession d'impulsions ultra-brèves en trains d'impulsions. Inversement, le module de mise en forme peut comprendre un dispositif optique permettant de transformer une impulsion unique femtoseconde en un train d'impulsions ultra-brèves, de durée effective supérieure à 1 ps.

Le module 22 de mise en forme des impulsions peut également comprendre des moyens de mise en forme spatiale des impulsions. Le module 22 comprend par exemple un dispositif d'optique adaptative ou un dispositif passif (par exemple fente, lentilles cylindrique ou masque de phase) pour mettre en forme la tâche focale, adapté par exemple pour les procédures d' « écriture transverse ».

Ainsi, la source laser impulsionnelle 21 peut comprendre tout type de laser impulsionnel à impulsions longues (> ps) (e.g. OPO, laser fibré, etc.), ou tout type de laser à impulsions courtes (<1 ps) à cadence >1 MHz en "découpant" ensuite les impulsions émises, grâce au module de mise en forme 23, pour former des trains d'impulsions de durée supérieure à 1ps, ou tout type de laser à impulsions courtes (<1 ps) à cadence <1 MHz en "séparant" optiquement des impulsions courtes en trains d'impulsions courtes à cadences >1 MHz (chaque train jouant alors le rôle d'une impulsion longue de durée > 1 ps).

En sortie de la source d'émission 20, le faisceau laser 203 est ainsi formé d'impulsions de durées effectives comprises entre 1 ps et 100 ns, qu'il s'agisse d'impulsions uniques ou de trains d'impulsions ultra-brèves, la durée d'un train d'impulsions étant comprise entre 1 ps et 100 ns.

Le module 23 de contrôle de l'énergie comprend par exemple la combinaison d'une lame demi-onde et d'un polariseur ou un jeu de filtres atténuateurs.

Le motif 101 parcouru par le volume de focalisation du faisceau 203 est déterminé en fonction de la fonction optique que l'on cherche à réaliser dans l'échantillon.

Selon un ou plusieurs exemples de réalisation, le volume de focalisation du faisceau laser parcourt une ou plusieurs lignes simples et/ou avec des embranchements, permettant de former des «canaux» avec un changement d'indice positif ; les éléments optiques ainsi réalisés sont des guides d'onde simples ou de type coupleurs, permettant de réaliser une circuiterie optique en 3D dans l'échantillon. Le changement d'indice positif résulte d'une modification structurelle de la matière (densification, amorphisation,...) ; par exemple, le silicium amorphe a une masse volumique plus faible que sa phase cristalline. On peut donc éventuellement changer sa cristallinité pour le densifier.

Selon un ou plusieurs exemples de réalisation, une irradiation peut être répétée en un point, le changement d'indice prend alors spontanément une forme biconvexe (la forme de la tache focale) et de ce fait forme un élément de type microlentille. Dans ce cas, on opère un déplacement relatif du faisceau laser et de l'échantillon seulement dans les cas où l'on cherche à former des micro lentilles de dimensions supérieures à celles du volume de focalisation.

Selon un ou plusieurs exemples de réalisation, une irradiation contrôlée du matériau peut être opérée pour former des "nanocracks" dans le matériau, de dimensions inférieures au dixième de la longueur d'onde. L'inclusion du "vide" permet alors d'avoir un changement d'indice négatif jusqu'à environ $10^{-2}$ sans perte; par ailleurs, les « nanocracks » sont perpendiculaires à la polarisation, ce qui induit une biréfringence de forme permettant de faire des lames d'onde.

Selon un ou plusieurs exemples de réalisation, un réseau de diffraction peut être inscrit par inscription de guides d'ondes agencés parallèlement les uns à côté des autres, séparés d'un pas régulier préalablement défini.

De manière générale une forme arbitraire peut être donnée au motif parcouru par le faisceau laser, de telle sorte que tout micro-dispositif optique basé sur une distribution d'indice maitrisée dans le volume du matériau puisse être réalisé.

Comme cela sera décrit plus en détails par la suite, le dispositif de mesure 30 de la partie réelle n de l'indice de réfraction de l'échantillon est relié à l'unité de contrôle 60. L'unité de contrôle 60 permet de contrôler le nombre d'impulsions reçu par point du motif en fonction de la mesure de la partie réelle de l'indice de réfraction de telle sorte à obtenir, en chaque point du motif, une modification progressive de la partie réelle de l'indice de réfraction du matériau jusqu'à une variation relative $\Delta n/n$ de la valeur de l'indice supérieure à $10^{-3}$.

Ainsi, dans l'exemple de la FIG. 1A, l'unité de contrôle est reliée à l'un et/ou l'autre des modules 21 - 23 formant la source d'émission 20 pour le contrôle des paramètres laser (taux de répétition, durée d'impulsion, longueur d'onde, géométrie du faisceau, énergie par impulsion, polarisation, forme spatiale du faisceau) et/ou aux moyens de déplacement relatifs 50 du faisceau laser et de l'échantillon (par exemple vitesse de balayage, nombre de passages sur un point donné du motif).

Notamment, le contrôle du type de polarisation (circulaire, linéaire, autre) peut être adapté en fonction de la fonction optique recherchée.

De la même manière, le type de géométrie de faisceau (gaussien, Bessel, vortex, tophat, etc.) peut également être adapté en fonction de la fonction optique recherchée.

La FIG. 1B illustre un exemple de module 22 adapté à la mise en œuvre spatiale du faisceau pour écriture transverse dans le volume d'un échantillon 10, par exemple du silicium. Le module 22 comprend une première lentille cylindrique 221, à l'entrée de laquelle un faisceau laser incident est gaussien, de diamètre Ø. Cette première lentille cylindrique 221 a la propriété de focaliser le faisceau selon une direction (notée Z), et de ne pas le modifier suivant la direction perpendiculaire (notée X). Le module 22 comprend une deuxième lentille cylindrique 222, de distance focale plus courte que celle de la première, avec un foyer objet correspondant au foyer image de la première lentille cylindrique 221. Par conséquent, l'ensemble des deux lentilles (ici convergentes) forme un montage afocal dit « télescope cylindrique ». Le faisceau après la seconde lentille cylindrique est collimaté, de forme elliptique, et le rapport entre son petit axe et son grand axe vaut $R=f_2/f_1$, où $f_1$ et $f_2$ correspondent respectivement aux distances focales de la première et de la seconde lentille.

Dans le but de diminuer ce rapport R, le module 22 comprend une fente 223 d'ouverture ajustable *s* plus faible que le petit axe du faisceau, placée sur l'axe optique (noté Y), parallèlement à direction du grand axe du faisceau. À la sortie de la fente, le faisceau présente alors un grand axe de longueur Ø, et un petit axe de largeur *s*. En ajustant la valeur de *s* par rapport à l'ouverture numérique du système de focalisation 40 (ici un objectif de microscope), à la taille de la pupille d'entrée de ce système, et à la profondeur de l'écriture dans le matériau, le faisceau dans un plan contenant l'axe optique Y présente une géométrique elliptique, voire circulaire.

La FIG. 1C illustre ainsi des images expérimentales illustrant le profil spatial des impulsions respectivement sans mise en forme (a), avec mise en forme dans l'air (b, c) et avec mise en forme dans un échantillon (d, e).

Plus précisément, l'image a) montre l'évolution de la propagation d'un faisceau gaussien (i.e., sans mise en forme spatiale) en fonction de la profondeur d'écriture *d* dans un plan contenant l'axe optique (ici horizontal). Le motif en région préfocale sur chaque image expérimentale est dû à l'impact des aberrations sphériques. Conformément à la théorie, il est d'autant plus prononcé que le faisceau est focalisé profondément dans le matériau. Par ailleurs, la distance de Rayleigh est d'autant plus allongée que *d* est important. Ainsi, pour obtenir une même forme de faisceau dans un plan contenant l'axe optique Y, il sera nécessaire de fermer la fente de façon d'autant plus importante que *d* est grand.

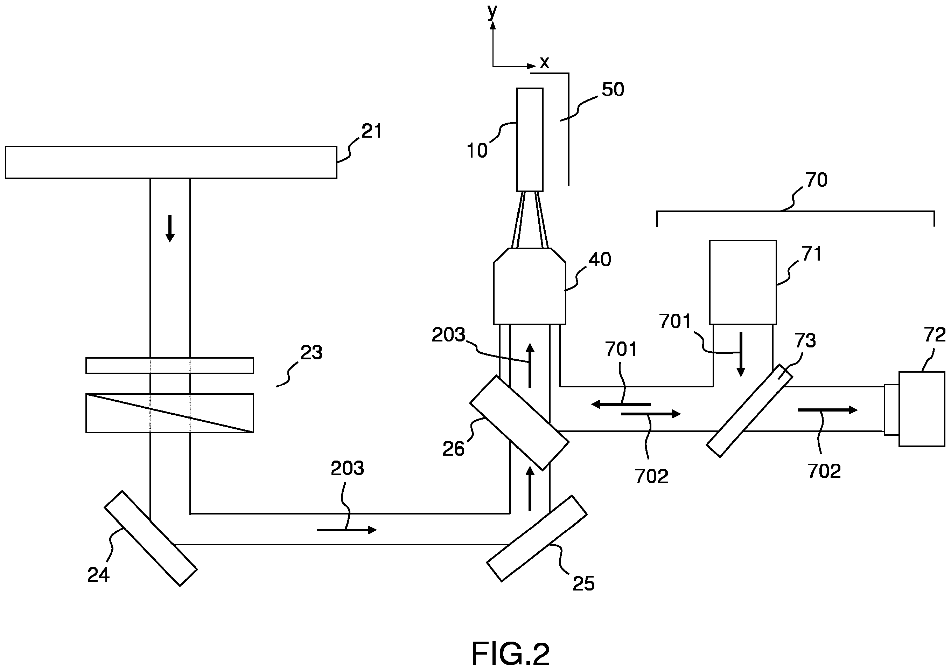

Les images b) et c) montrent l'évolution de la propagation du faisceau dans l'air et les images d) et e) montrent l'évolution de la propagation du faisceau à *d*=100 μm de profondeur dans le l'échantillon (silicium), avec une fente d'ouverture *s* = 280 μm orientée selon Z, selon les plans perpendiculaires (X, Y) (à gauche) et (Z, Y) (à droite) chacun contenant l'axe optique Y. Dans chaque milieu, la propagation dans le plan (X, Y) est conforme à celle prévue par la théorie de la focalisation gaussienne. En revanche, dans le plan (Z, Y), la propagation est elliptique. Ceci est dû à la perte de l'ouverture numérique du système de focalisation dans la direction perpendiculaire à la fente. Enfin, quel que soit le plan d'observation, on remarque une propagation dans le silicium similaire à l'air, mais étirée d'un facteur 3,5 qui correspond à la partie réelle de l'indice de réfraction du silicium cristallin.La FIG. 2 illustre dans un exemple de réalisation un premier sous-système d'un système d'inscription laser selon la présente description, qui permet la modification de la partie réelle de l'indice de réfraction dans le matériau semi-conducteur. Ainsi, le dispositif de mesure de la partie réelle de l'indice de réfraction n'est pas représenté sur la FIG. 2.

Le premier sous-système comprend une source d'émission 20 d'un faisceau laser 203 formé d'impulsions ; dans cet exemple, la source d'émission 20 comprend une source laser impulsionnelle 21 produisant des impulsions à une longueur d'onde donnée, par exemple à une longueur d'onde de 1550 nm pour la fonctionnalisation optique du silicium. Les impulsions sont par exemple des impulsions simples, de durée d'impulsion comprise entre 1 ps et 100 ns, avantageusement supérieure à 1 ns, émises avec un taux de répétition compris entre 100 Hz et 5 kHz. Dans l'exemple de la FIG. 2, la source d'émission 20 comprend un module 23 de contrôle de l'énergie par impulsion, formé par exemple d'une lame demi-onde et d'un polariseur, l'énergie pouvant être contrôlée par la rotation de la lame demi-onde. Le faisceau est ensuite transporté par des miroirs 24, 25, les miroirs permettant une réflexion supérieure à 95% à la longueur d'onde d'émission de la source impulsionnelle 21, par exemple des miroirs en or. Le faisceau laser est focalisé dans l'échantillon 10 par un système de focalisation 40, par exemple un objectif de microscope dont l'ouverture numérique définit la dimension du volume de focalisation. Dans l'exemple de la FIG. 2, des platines motorisées permettent le positionnement et le déplacement de l'échantillon dans le plan (X, Z) perpendiculaire à l'axe optique Y.

Ainsi dans l'exemple de la FIG. 2, le procédé peut être mis en œuvre en travaillant à géométrie de faisceau fixe, durée d'impulsion et taux de répétition fixes. Les paramètres qui pourront être contrôlés pour obtenir la variation progressive de l'indice de réfraction seront l'énergie par impulsion, et la vitesse de balayage et le nombre de passage pour le contrôle du nombre de tirs. Bien entendu, des alternatives sont possibles. Notamment, on peut envisager de faire varier la géométrie du faisceau par l'utilisation de plusieurs objectifs, ou l'on peut dans d'autres exemples faire varier la durée de l'impulsion et/ou le taux de répétition.

Par ailleurs, dans l'exemple de la FIG. 2, un microscope infrarouge en réflexion 70 est implémenté sur le dispositif afin de positionner l'échantillon et visualiser la zone irradiée. Il comprend une source démission 71, par exemple une diode électroluminescente (LED en anglais pour « Light-Emitting Diode »), produisant une lumière continue 701 à une longueur d'onde appartenant à la bande spectrale de transparence du matériau mais différente de la longueur d'onde d'émission de la source impulsionnelle 21, par exemple une source à 1200 nm. La lumière incidente 701 passe tout d'abord par une lame semi-réfléchissante 73, par exemple une lame 50/50. Cette lumière est ensuite envoyée dans l'objectif de microscope 40 par un miroir dichroïque 26, transparent à la longueur d'onde d'émission de la source 21 et réfléchissant à la longueur d'onde d'émission de la source 71. La lumière est ainsi focalisée puis réfléchie sur l'échantillon 10. Après réflexion, la lumière suit le chemin inverse 702, et passe à nouveau par la lame semi-réfléchissante 73. La lumière transmise est enfin collectée par une caméra 72 qui permet de visualiser la zone de focalisation.

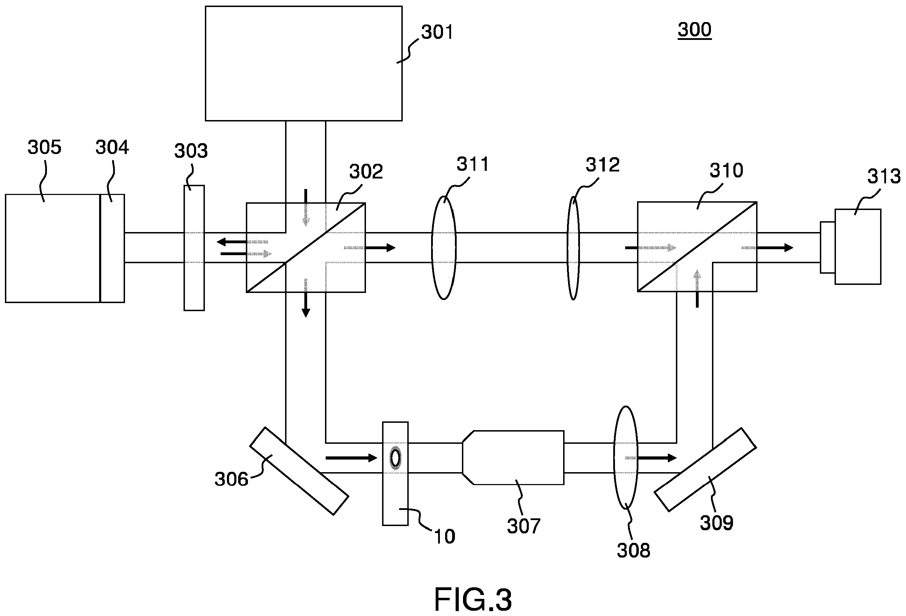

La FIG. 3 représente un schéma illustrant un exemple de microscope de phase 300 pour la mesure de la partie réelle de l'indice de réfraction dans le matériau semi-conducteur.

Le microscope de phase 300 comprend une source d'illumination 301, par exemple un laser impulsionnel adapté pour l'émission d'impulsions ultra-brèves (<1 ps) dont la longueur d'onde appartient à la bande spectrale de transparence du matériau. La lumière est séparée en deux bras au moyen d'un élément séparateur 302 pour former un interféromètre, dans cet exemple un interféromètre de Mach-Zehnder. L'élément séparateur est par exemple un polariseur linéaire. Le premier bras dit « de référence » (composante réfléchie par l'élément séparateur 302) comprend un miroir 304, par exemple un miroir en or, monté sur un moteur piézoélectrique 305 permettant d'assurer des déplacements nanométriques. Dans l'exemple de la FIG. 3, le bras de référence comprend en outre une lame quart d'onde 303, de telle sorte que le faisceau, après réflexion sur le miroir 304, passe à nouveau par la lame quart d'onde 303 tournant sa polarisation ; il est alors transmis à travers le polariseur 302. Un système afocal constitué de lentilles 311 et 312 permet d'ajuster la taille du faisceau. Le faisceau de référence passe finalement par un deuxième élément séparateur 310, par exemple un autre polariseur, et est transmis jusqu'à une caméra 313. Le second bras dit « de mesure» (composante transmise par l'élément séparateur 302) comprend tout d'abord un miroir 306, par exemple un miroir en or. Le faisceau est alors dirigé vers la zone à observer de l'échantillon 10. L'imagerie se fait par exemple au moyen d'un objectif de microscope 307. Une lentille de tube 308 permet de collimater le faisceau. Puis, le faisceau de mesure est réfléchi par le miroir 309 sur l'élément séparateur 310 puis sur la caméra 313. La caméra observe alors des interférences entre les bras de référence et de mesure. En ajustant le chemin optique du bras de référence au moyen du moteur piézoélectrique 304, il est possible d'acquérir plusieurs images de ces interférences avec un déphasage donné entre chaque acquisition ; par exemple quatre images présentant un déphasage de $\pi/2$ entre chaque acquisition. Il est alors possible de relier de façon simple l'intensité des quatre images avec le déphasage induit par la modification dans l'échantillon 10. Ce déphasage étant lui-même relié simplement à la variation relative d'indice, il est possible de mesurer cette variation. Un microscope de phase est par exemple décrit dans l'article de J.H. Bruning et al. («Digital Wavefront Measurement Interferometer for Testing Optical Surfaces and Lenses», Appl. Optics, Vol. 13, N°11, pp 2633 - 2703). Dans l'exemple de la FIG. 3, un microscope de phase tel que décrit dans J.H. Bruning *et al.* est adapté pour fonctionner en transmission au lieu de fonctionner en réflexion, et dans l'infrarouge.

D'autres dispositifs de mesure de la partie réelle de l'indice de réfraction dans le matériau semi-conducteur peuvent être envisagés, comme par exemple d'autres systèmes interférométriques, des systèmes d'holographie, un analyseur de front d'onde (type Shark Hartmann ou ses versions modifiées) tous adaptées pour travailler dans le domaine infrarouge.

Ces dispositifs peuvent être complétés par des diagnostics non quantitatifs de la partie réelle de l'indice de réfraction, comme par exemple la microscopie à fond noir (dite « Dark Field » selon l'expression Anglo-Saxonne) ou la mesure de diffusion. Plus précisément, la zone à observer dans l'échantillon est illuminée dans une direction différente de la direction d'observation. En cas de variation de la partie réelle de l'indice de réfraction, la zone présentant la modification de la partie réelle de l'indice de réfraction diffuse la lumière incidente et devient observable.

Grâce à la mesure de la partie réelle de l'indice de réfraction dans le matériau semi-conducteur, il est possible de modifier les paramètres du faisceau laser (par exemple nombre de tirs, énergie) pour augmenter progressivement la variation de l'indice de réfraction et atteindre la fonction optique souhaitée dans le matériau sans induire d'endommagement. En effet, l'absorption d'un flux laser trop intense est susceptible d'augmenter localement la température du matériau, donnant lieu à des phénomènes hydrodynamiques (e.g. ondes de pression ou de choc). Dans ce cas, le matériau n'est pas localement densifié mais des microcavités sont susceptibles de se former. Ces cavités forment des défauts incontrôlés qui induiront des pertes en diffusion et abaisseront (voire supprimeront) les performances optiques du composant optique ainsi réalisé.

Selon un ou plusieurs exemples de réalisation, pour un matériau semi-conducteur donné, des « fenêtres de travail » sont déterminées pour chacun des paramètres que l'on veut contrôler afin de modifier la partie réelle de l'indice de réfraction. Ce travail d'étalonnage préalable permet de gagner encore en efficacité lors de la mise en œuvre du procédé d'inscription laser 3D selon la présente description.

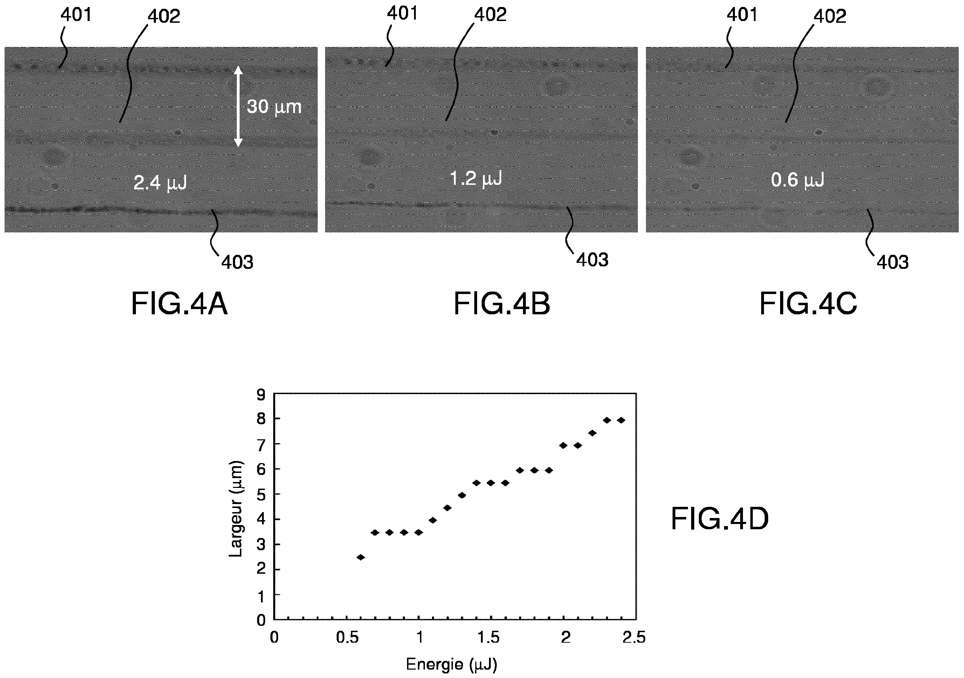

Ainsi, les FIGS. 4 à 6 illustrent des résultats expérimentaux obtenus par les inventeurs pour montrer l'influence de paramètres de contrôle sur la variation de la partie réelle de l'indice de réfraction dans un échantillon en silicium.

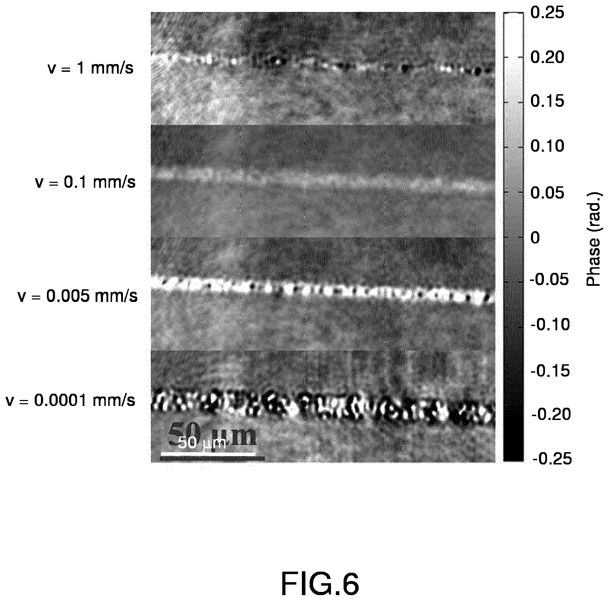

Les résultats montrés sur les FIGS. 4 à 6 ont été obtenus, pour la création des modifications structurelles du matériau, avec un premier sous-système tel que représenté sur la FIG. 2 et l'image de phase représentée sur la FIG. 6 a été obtenue avec un deuxième sous-système tel qu'illustré sur la FIG. 3.

Plus précisément, le premier sous-système utilisé comprend une source laser 21 (MWTech, PFL-1550) produisant des impulsions à une longueur d'onde de 1550 nm, avec une durée d'impulsion de 5 ns et un taux de répétition de 1 kHz. L'énergie sur cible est contrôlée par un ensemble lame demi-onde + polariseur 23. Le faisceau est ensuite transporté par des miroirs en or (24 et 25). Le faisceau laser est focalisé dans l'échantillon 10 par un objectif de microscope 40 d'ouverture numérique 0,42, le diamètre du faisceau dans le volume de focalisation étant de 2,3 $\mu$m (mesuré à $1/e^2$) et la distance de Rayleigh de 2,8 $\mu$m dans l'air et 9,8 $\mu$m dans le silicium. Des platines motorisées permettent le positionnement et le déplacement de l'échantillon dans le plan (X,Z) perpendiculaire à l'axe optique Y. Un microscope infrarouge en réflexion 70 est implémenté sur le dispositif afin de positionner l'échantillon et visualiser la zone irradiée. Il comprend une diode électroluminescente (LED en anglais pour « Light-Emitting Diode ») 71, produisant une lumière continue à 1200 nm. La lumière incidente (701) passe tout d'abord par une lame semi-réfléchissante 50/50 (73). Cette lumière est ensuite envoyée dans l'objectif de microscope 40 par un miroir dichroïque 26, transparent à 1550 nm et réfléchissant à 1200 nm. La lumière est ainsi focalisée puis réfléchie sur l'échantillon 10. Après réflexion, la lumière suit le chemin inverse 702, et passe à nouveau par la lame semi-réfléchissante 73. La lumière transmise est enfin collectée par une caméra In-GaAs 70 qui présente une réponse linéaire à 1200 nm, et qui permet de visualiser la zone de focalisation.

Par ailleurs, le microscope de phase utilisé pour la formation de l'image de la FIG. 6 est du type de celui décrit sur la FIG. 3 et comprend plus précisément un laser impulsionnel 301 (100 fs) à 1300 nm (Spectra Physics Mai Tai® et Spectra Physics Hurricane® et Spectra Physics OPA 800CF®) et une caméra 313 de type In-GaAs.

Les déposants ont montré avec le système ainsi réalisé qu'une variation relative de la partie réelle de l'indice de réfraction était mesurable pour des énergies d'impulsion supérieures à 0,5 $\mu$J, correspondant à des intensités lumineuses par impulsion supérieures à environ 4 GW/cm$^2$.

Les FIGS. 4A à 4C montrent des résultats expérimentaux illustrant l'influence de l'énergie par impulsion pour différentes vitesses de balayage du faisceau laser. Sur ces figures, les lignes 401, 402, et 403 ont été écrites aux énergies indiquées et à une vitesse de déplacement de l'objectif de microscope de 1 mm/s, 0,1 mm/s, et 0,01 mm/s. Comme cela est visible sur les figures, la morphologie de la ligne écrite dépend directement de la vitesse d'écriture. Les lignes 401 et 403 comportent des taches noires qui ont été mesurées comme étant en fait des cavités. En revanche, les lignes 402 sont des canaux de modifications homogènes (et donc potentiellement des guides d'onde). La largeur des lignes 402 dépend de l'énergie laser. La FIG. 4D représente une courbe expérimentale illustrant la largeur d'un guide d'onde obtenu en fonction de l'énergie par impulsion. Cette largeur évolue ici linéairement en fonction de l'énergie laser.

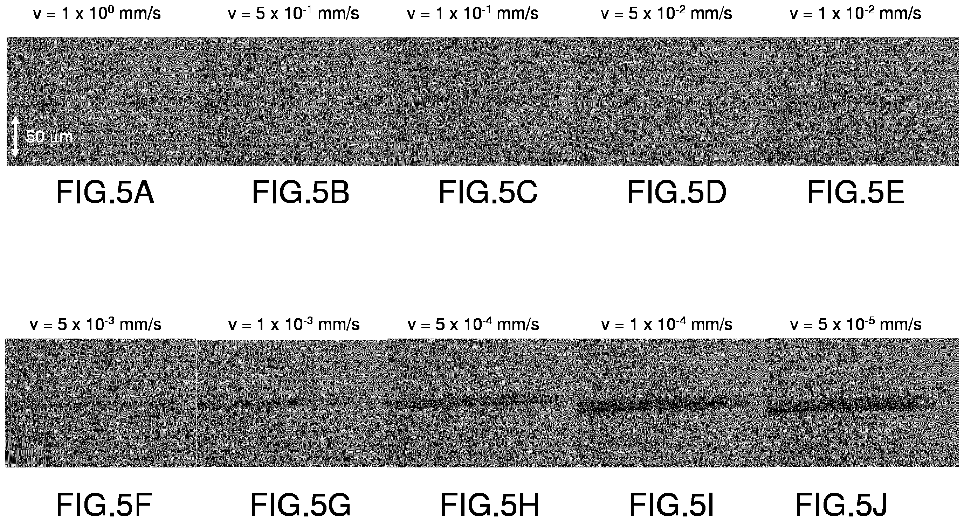

Les FIGS. 5A à 5J illustrent des résultats expérimentaux montrant l'influence de la vitesse de balayage du faisceau laser. Ces résultats, à la fois cohérents et complémentaires à ceux des FIGS 4A à C, ont été obtenus pour une énergie de 2 $\mu$J. On observe que pour des vitesses d'écriture supérieures ou égales à 0,5 mm/s des dommages sont formés dans la structure (FIGS 5A et 5B). Des dommages sont également présents pour des vitesses inférieures ou égales à 0,01 mm/s (FIGS 5E à 5J). Dans ce cas, on note que la structure comprend d'autant plus de dommages que la vitesse est faible. De plus, la structure inscrite est d'autant plus large que la vitesse est faible. Cette accumulation dénote une croissance des dommages lorsque le nombre de tirs appliqué par point est grand. Pour des vitesses d'écriture comprises entre 0,01 mm/s et 0,5 mm/s, aucun dommage n'est notable et le guide d'onde écrit est homogène.

La FIG. 6 illustre des résultats expérimentaux montrant la variation de phase induite pour différentes vitesses de balayage du faisceau laser. L'information sur la phase permet de connaître la nature physique des modifications produites à une énergie par impulsion de 2 $\mu$J. Pour une vitesse d'écriture de 1 mm/s, la modification produite est composée de zones à phase positive (i.e., densification optique) et d'autres à phase négative (i.e., cavités, ou dommages). C'est également le cas pour les vitesses de 0,005 mm/s et 0,0001 mm/s. On peut noter que les zones à phase négative sont d'autant plus importantes que la vitesse d'écriture est faible. La modification créée à une vitesse de 0,1 mm/s est homogène, positive, et sans dommage. La variation relative d'indice correspondant est supérieure à 10$^{-3}$, ce qui est suffisant pour guider la lumière.

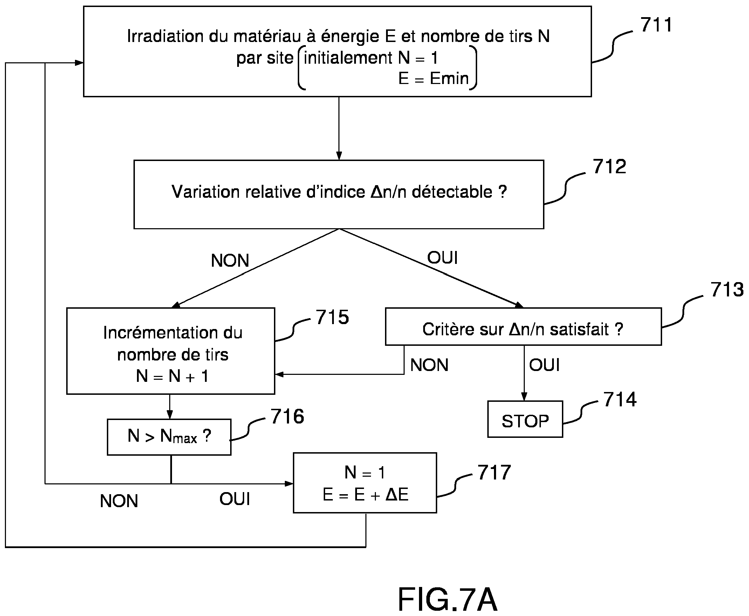

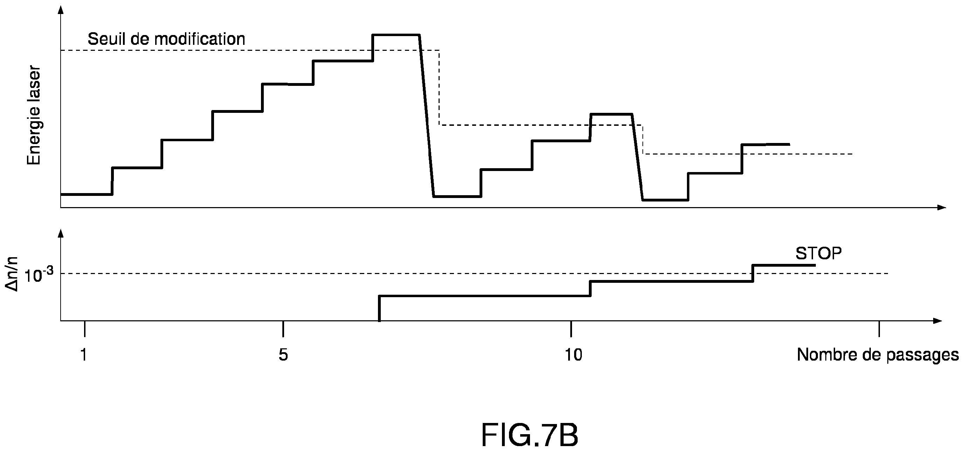

Les FIGS. 7A et 7B illustrent des exemples de mise en œuvre du procédé selon la présente description permettant de contrôler avec encore plus de finesse la variation de l'indice de réfraction. Dans ces exemples, on propose une rétroaction sur le nombre de tirs et/ou sur l'énergie pour une variation progressive de la partie réelle de l'indice de réfraction. Plus précisément, le procédé comprend des étapes itératives de contrôle du nombre d'impulsions reçues par point du motif, chaque étape étant définie par l'obtention d'une valeur prédéfinie de la variation relative de la partie réelle de l'indice de réfraction, par exemple le minimum détectable. Les étapes sont poursuivies jusqu'à obtenir la variation relative $\Delta n/n$ de la partie réelle de l'indice de réfraction recherchée.

La FIG. 7A illustre ainsi un premier exemple de procédé en plusieurs étapes, selon la présente description. Dans une première étape (711), le nombre de tirs N et l'énergie sont fixés à des valeurs prédéterminées, par exemple N = 1 et E = Emin, par exemple E = 0,1 $\mu$J. On mesure la variation relative de l'indice (étape 712). A chaque fois que la variation d'indice relative est détectable, on vérifie (713) que le critère $\Delta n/n$ est satisfait, c'est-à-dire que la valeur recherchée pour la variation d'indice relative est atteinte. Si c'est le cas, le procédé est stoppé (714). Si la variation d'indice n'est pas détectable, ou le critère $\Delta n/n$ non satisfait, on revient à l'étape 711 après incrémentation du nombre de tirs (715) jusqu'à avoir atteint un nombre de tirs maximal Nmax (716). Lorsqu'on a atteint le nombre de tirs maximal, on réitère la première étape, par exemple en augmentant l'énergie et en repartant du nombre de tirs initial N =1.

Dans l'exemple de la FIG. 7A, le nombre de tirs est augmenté au cours de chaque étape tandis que l'énergie est maintenue constante et croît au passage de l'étape suivante.

La FIG. 7B illustre une variante dans laquelle l'énergie est augmentée à chaque passage du faisceau laser sur un point du motif jusqu'à dépasser le seuil pour lequel un changement d'indice est détecté (fonction de la sensibilité du microscope de phase). En effectuant une nouvelle « rampe » en énergie (deuxième étape) on détecte une modification à plus basse énergie. On répète ainsi l'opération jusqu'à obtenir une variation relative de l'indice de la valeur souhaitée, par exemple ici + 10$^{-3}$.

Les approches décrites permettent de modifier le matériau à chaque fois au plus près du seuil pour un effet très progressif nécessaire pour une variation homogène. Il s'agit d'un exemple de méthode que chacun pourra généraliser à d'autres paramètres de contrôle.

Selon un ou plusieurs exemples de réalisation, il est possible d'avoir une progressivité accrue en couplant la mesure quantitative de la partie réelle de l'indice de réfraction par une mesure non quantitative grâce à la mesure d'un signal de diffusion résultant de l'illumination de la zone à observer dans une direction différente de la direction d'observation. En cas de variation de la partie réelle de l'indice, la zone présentant une modification de la partie réelle de l'indice diffuse la lumière incidente et devient observable. Dans les exemples des FIGS. 7A, 7B, les itérations peuvent être réalisées sur un critère lié au signal de diffusion, jusqu'à ce que la valeur d'indice *Δ*n soit mesurable par microscopie de phase ou autre. La condition d'arrêt (714) reste sur la valeur de Δn atteinte. Par exemple, on irradie le matériau avec des conditions croissantes (par exemple énergie, nombre de tir) jusqu'à ce que le signal de diffusion soit détectable indiquant un changement d'indice (même si le changement n'est pas mesuré quantitativement). On peut itérer la procédure pour augmenter progressivement le signal de diffusion et ce, autant de fois que nécessaire pour atteindre un changement d'indice de réfraction accessible par mesure quantitative. Le signal de diffusion (non quantitatif) et toute autre mesure optique traduisant un changement d'indice peuvent offrir une progressivité d'autant plus accrue que la sensibilité au changement d'indice est importante.

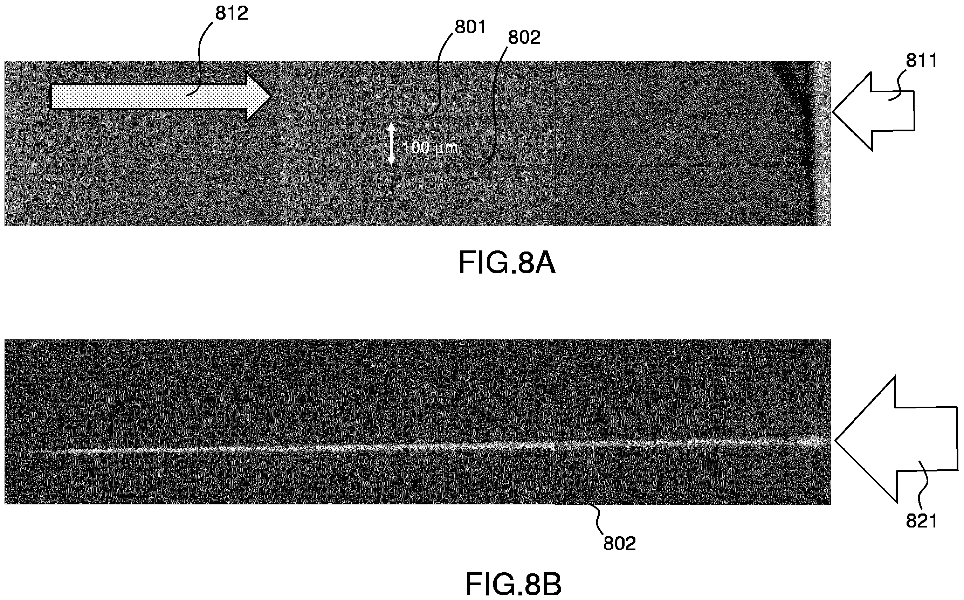

Grâce à la mise en œuvre du procédé d'inscription laser en 3D selon la présente description, les déposants ont pu démontrer une fonctionnalisation optique par inscription laser directe en profondeur dans un échantillon en silicium. Les FIGS 8 à 10 montrent des résultats expérimentaux obtenus.

Pour ces expériences, un système tel que décrit sur la FIG. 2 a été utilisé (voir description des différents éléments ci-dessus, en relation avec les FIGS 4 à 6).

Plus précisément, les FIGS. 8A et 8B montrent des images illustrant un premier exemple de propagation de la lumière dans un guide d'onde élémentaire obtenu par un procédé selon la présente description. L'image représentée sur la FIG. 8A est acquise par une caméra InGaAs éclairée en lumière blanche. Elle offre une visualisation de guides d'onde 801 et 802. Le point focal est déplacé selon la direction 812, opposé à la propagation du laser 811. L'image représentée sur la FIG. 8B correspondant au même site est acquise par la même caméra permettant de détecter la lumière diffusée dans le guide d'onde. Une diode laser produit de la lumière continue à 1550 nm 821 qui est focalisée à l'entrée du guide d'onde 802, parallèlement à celui-ci. La lumière se propage à l'intérieur du guide d'onde.

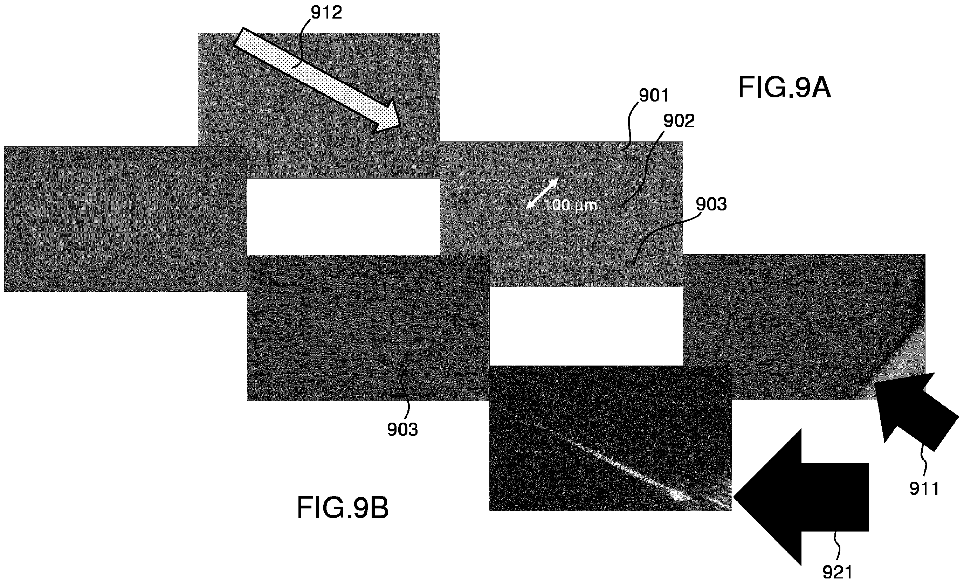

Les FIGS. 9A et 9B montrent un deuxième exemple de propagation de la lumière dans un guide d'onde élémentaire obtenu par un procédé selon la présente description. Sur la figure 9A, les flèches 911 et 912 correspondent respectivement à la direction de propagation du laser d'écriture, et au sens de déplacement du point focal. Trois guides d'onde 901, 902 et 903 ont été écrits. L'image représentée sur la FIG. 9B a été obtenue de la même façon que sur la FIG. 8B, mais en introduisant un angle d'incidence de 35° entre la lumière continue 921 et le guide d'onde 903. On peut noter que la lumière suit préférentiellement la direction du guide d'onde, malgré l'angle introduit. Néanmoins, le couplage est moins bon que dans le cas d'une injection parallèle au guide d'onde.

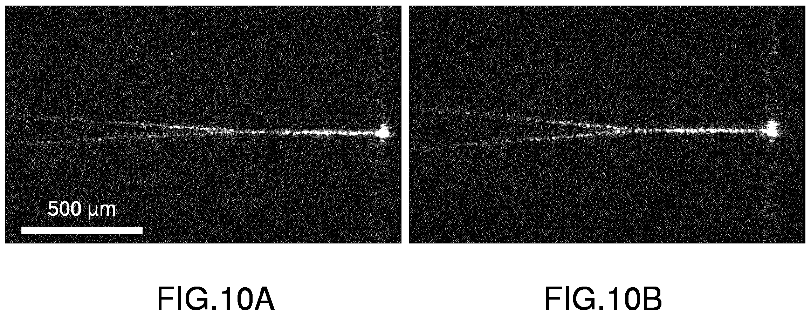

Les FIGS. 10A et 10B montrent un troisième et un quatrième exemple de propagation de la lumière dans un coupleur en Y obtenu par un procédé selon la présente description. Les deux bras du « Y » sont inscrits depuis l'intérieur du silicium vers la surface et se rejoignent en un point. Puis, un guide d'onde élémentaire est inscrit en partant de ce point jusqu'à la surface de l'échantillon. De même que pour les FIGS. 8B et 9B, de la lumière à 1550 nm est injectée à l'entrée du coupleur en Y. La lumière est alors guidée au début du coupleur, puis répartie dans chacun des deux bras, au lieu de se propager de façon rectiligne. Ces exemples de coupleurs en Y sont une fonctionnalisation particulièrement intéressante du matériau puisqu'ils permettent l'acheminement de la lumière simultanément à différents endroits.

En conclusion, ces démonstrations permettent de montrer qu'il est possible d'inscrire avec la méthodologie décrite tous dispositifs basés sur un changement d'indice $>10^{-3}$ contrôlé avec une résolution micrométrique en 3D à l'intérieur du silicium et autres semi-conducteurs.

Bien que décrits à travers un certain nombre d'exemples de réalisation détaillés, les procédés et systèmes de fonctionnalisation optique en profondeur d'un échantillon en matériau semi-conducteur comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

**Revendications**

1. Procédé de fonctionnalisation optique en profondeur d'un échantillon (10) en matériau semi-conducteur, comprenant :

   - l'émission d'un faisceau laser (203) formé d'impulsions de durées effectives comprises entre 1 ps et 100 ns, présentant une longueur d'onde dans la bande spectrale de transparence du matériau ;
   - la focalisation en profondeur dans l'échantillon du faisceau laser, selon un motif (101) prédéterminé, l'intensité lumineuse par impulsion dans un volume de focalisation du faisceau laser étant adaptée à la génération d'une absorption multiphotonique ;
   - la mesure de la partie réelle de l'indice de réfraction de l'échantillon en chaque point du motif ;
   - le contrôle du nombre d'impulsions reçues par point du motif en fonction de ladite mesure de la partie réelle de l'indice de réfraction de telle sorte à obtenir, en chaque point du motif, une modification progressive de la partie réelle de l'indice de réfraction du matériau jusqu'à une variation relative de la partie réelle de l'indice de réfraction supérieure à $10^{-3}$ en valeur absolue.

2. Procédé selon la revendication 1, dans lequel les impulsions sont émises avec un taux de répétition donné, inférieur à 100 kHz.

3. Procédé selon l'une quelconque des revendications précédentes, comprenant en outre le déplacement relatif du faisceau laser et de l'échantillon, le long dudit motif, à une vitesse de balayage donnée.

4. Procédé selon l'une quelconque des revendications précédentes, dans lequel le contrôle du nombre d'impulsions reçues par point du motif comprend le contrôle d'un taux de répétition des impulsions et/ou le contrôle d'une vitesse de balayage du faisceau laser dans l'échantillon et/ou le contrôle d'une dimension du volume de focalisation.

5. Procédé selon l'une quelconque des revendications précédentes, comprenant en outre le contrôle de l'intensité lumineuse par impulsion dans le volume de focalisation pour obtenir la modification progressive de la partie réelle de l'indice réfraction du matériau.

6. Procédé selon l'une quelconque des revendications précédentes, dans lequel le contrôle du nombre d'impulsions comprend :

   - une première étape de contrôle du nombre d'impulsions reçues par point du motif pour atteindre une première variation relative de la partie réelle de l'indice de réfraction;
   - au moins une deuxième étape de contrôle du nombre d'impulsions reçues par point du motif pour atteindre une deuxième variation relative de la partie réelle de l'indice de réfraction;
   - une itération de ladite deuxième étape jusqu'à l'obtention variation relative de la partie réelle de l'indice de réfraction supérieure ou égale à une valeur prédéterminée.

7. Procédé selon la revendication 6, dans lequel la première et la deuxième variation relative de la partie réelle de l'indice de réfraction correspondent à la plus petite variation détectable de la partie réelle de l'indice de réfraction.

8. Procédé selon l'une quelconque des revendications 6 ou 7, comprenant une augmentation progressive de l'intensité lumineuse par impulsion dans le volume de focalisation, à partir d'une valeur minimale prédéterminée, au cours de chaque étape.

9. Procédé selon l'une quelconque des revendications 6 ou 7, comprenant une augmentation de l'intensité lumineuse par impulsion dans le volume de focalisation, à partir d'une valeur minimale prédéterminée, lors du passage d'une étape à une étape ultérieure.

10. Procédé selon l'une quelconque des revendications précédentes, comprenant en outre une phase préalable d'étalonnage.

11. Procédé selon l'une quelconque des revendications précédentes, dans lequel chacune des impulsions 2. de durées effectives comprises entre 1 ps et 100 ns est formée d'un train d'impulsions ultra-brèves de durée inférieure à 1 ps.

12. Procédé selon l'une quelconque des revendications précédentes, dans lequel le motif est déterminée pour la formation d'au moins l'un des éléments optiques suivants : guide d'ondes, microlentille, réseau de diffraction, lame séparatrices, filtre optiques, lame d'onde.

13. Système (100) pour la fonctionnalisation optique en profondeur d'un échantillon (10) en matériau semi-conducteur, comprenant :

   - une source d'émission (20) d'un faisceau laser formé d'impulsions de durées effectives comprises entre 1 ps et 100 ns, présentant une longueur d'onde dans la bande spectrale de transparence du matériau;
   - un objectif de microscope (40) pour la focalisation en profondeur dans l'échantillon du faisceau laser selon un motif prédéterminé, l'intensité lumineuse par impulsion dans un volume de focalisation du faisceau laser étant adaptée pour la génération d'une absorption multi-photonique dans le matériau semi-conducteur;
   - un dispositif de mesure (30) de la partie réelle de l'indice de réfraction de l'échantillon en chaque point du motif ;
   - une unité de contrôle (60) du nombre d'impulsions reçues par point du motif en fonction de ladite mesure de la partie réelle de l'indice de réfraction de telle sorte à obtenir, en chaque point du motif, une modification progressive de la partie réelle de l'indice de réfraction du matériau jusqu'à une variation relative de la partie réelle de l'indice de réfraction supérieure à $10^{-3}$ en valeur absolue.

14. Système selon la revendication 13, comprenant en outre des moyens de déplacement relatifs (50) du volume de focalisation et de l'échantillon pour la focalisation du faisceau laser selon le motif prédéterminé.

15. Système selon l'une quelconque des revendications 13 ou 14, dans lequel le dispositif de mesure (30) est un microscope de phase.

**Patentansprüche**

1. Verfahren zur optischen Tiefenfunktionalisierung einer Probe (10) aus Halbleitermaterial, die folgenden Schritte aufweisend:

- Emittieren eines Laserstrahls (203), der aus Impulsen mit einer effektiven Zeitdauer zwischen 1 ps und 100 ns gebildet wird und eine Wellenlänge im transparenten Spektralband des Materials aufweist;
- Fokussieren des Laserstrahls in der Tiefe der Probe gemäß eines vorbestimmten Musters (101), wobei die Lichtintensität pro Impuls in einem Fokussierungsvolumen des Laserstrahls geeignet ist, eine Multiphotonenabsorption zu erzeugen;
- Messen des Realteils des Brechungsindexes der Probe an jedem Punkt des Musters;
- Steuern der Anzahl der pro Punkt des Musters empfangenen Impulse in Abhängigkeit von der Messung des Realteils des Brechungsindexes, so dass an jedem Punkt des Musters eine zunehmende Änderung des Realteils des Brechungsindexes des Materials bis zu einer relativen Änderung des Realteils des Brechungsindexes von mehr als $10^{-3}$ als Absolutwert erzielt wird.

2. Verfahren nach Anspruch 1, bei dem die Impulse mit einer vorgegebenen Wiederholungsrate von weniger als 100 kHz ausgesendet werden.

3. Verfahren nach einem der vorhergehenden Ansprüche, bei dem ferner die Relativbewegung des Laserstrahls und der Probe entlang des Musters mit einer gegebenen Abtastgeschwindigkeit erfolgt.

4. Verfahren nach einem der vorhergehenden Ansprüche, wobei die Überwachung der Anzahl der pro Punkt des Musters empfangenen Impulse die Überwachung einer Impulswiederholungsrate und/oder die Überwachung einer Abtastgeschwindigkeit des Laserstrahls in der Probe und/oder die Überwachung einer Größe des Fokussierungsvolumens einschließt.

5. Verfahren nach einem der vorhergehenden Ansprüche, das zusätzlich die Überwachung der Lichtintensität pro Impuls im Fokussierungsvolumen aufweist, um eine allmähliche Änderung des Realteils des Brechungsindexes des Materials zu erreichen.

6. Verfahren nach einem der vorhergehenden Ansprüche, wobei die Überwachung der Impulszahl folgende Schritte aufweist:

- einen ersten Schritt zum Überwachen der Anzahl der Impulse, die pro Punkt des Musters empfangen werden, um eine erste relative Änderung des Realteils des Brechungsindexes zu erhalten;
- mindestens einen zweiten Schritt zur Überwachung der Anzahl der pro Punkt des Musters empfangenen Impulse, um eine zweite relative Änderung des realen Teils des Brechungsindexes zu erhalten;
- eine Iteration des zweiten Schritts, bis die relative Änderung des Realteils des Brechungsindexes größer oder gleich einem vorbestimmten Wert ist.

7. Verfahren nach Anspruch 6, wobei die erste und die zweite relative Änderung des Realteils des Brechungsindexes der kleinsten erfassbaren Änderung des Realteils des Brechungsindexes entspricht.

8. Verfahren nach einem der Ansprüche 6 oder 7, bei dem die Lichtintensität pro Impuls im Fokussiervolumen ausgehend von einem vorbestimmten Minimalwert in jedem Schritt schrittweise erhöht wird.

9. Verfahren nach einem der Ansprüche 6 oder 7, umfassend eine Erhöhung der Lichtintensität pro Impuls im Fokussiervolumen von einem vorbestimmten Minimalwert beim Übergang von einem Schritt zu einem nachfolgenden Schritt.

10. Verfahren nach einem der vorhergehenden Ansprüche, das zusätzlich eine vorhergehende Kalibrierungsphase aufweist.

11. Verfahren nach einem der vorhergehenden Ansprüche, bei dem jeder der Impulse mit effektiven Zeitdauern zwischen 1 ps und 100 ns aus einer Folge von ultrakurzen Impulsen mit einer Zeitdauer von weniger als 1 ps gebildet wird.

12. Verfahren nach einem der vorhergehenden Ansprüche, wobei das Muster für die Bildung mindestens eines der folgenden optischen Elemente bestimmt ist: Wellenleiter, Mikrolinse, Beugungsgitter, Trennplatte, optischer Filter, Wellenblatt.

13. System (100) zur optischen Tiefenfunktionalisierung einer Probe (10) aus Halbleitermaterial, aufweisend:

- eine Emissionsquelle (20) für einen Laserstrahl, der aus Impulsen mit effektiven Zeitdauern zwischen 1 ps und 100 ns gebildet ist und der eine Wellenlänge im Spektralband der Transparenz des Materials aufweist;
- ein Mikroskopobjektiv (40) zur Tiefenfokussierung des Laserstrahls in der Probe gemäß eines vorbestimmten Musters, wobei die Lichtintensität pro Impuls in einem Fokussierungsvolumen des Laserstrahls zur Erzeugung von Multiphotonenabsorption in dem Halbleitermaterial angepasst ist; und ein Mikroskopobjektiv (40) zur Tiefenfokussierung des Laserstrahls in der Probe gemäß eines vorbestimmten Musters, wobei die Lichtintensität pro Impuls in einem Fokussierungsvolumen des Laserstrahls zur Erzeugung von Multiphotonenabsorption in dem Halbleitermaterial angepasst ist;
- eine Vorrichtung (30) zum Messen des Realteils des Brechungsindexes der Probe an jedem Punkt des Musters;
- eine Einheit (60) zur Überwachung der Anzahl der pro Punkt des Musters empfangenen Impulse in Abhängigkeit von der Messung des Realteils des Brechungsindexes, so dass an jedem Punkt des Musters eine zunehmende Änderung des Realteils des Brechungsindexes des Materials bis zu einer relativen Änderung des Realteils des Brechungsindexes von mehr als $10^{-3}$ als Absolutwert erzielt wird.

14. System nach Anspruch 13, ferner aufweisend eine Einrichtung (50) zur relativen Bewegung des Fokussierungsvolumens und der Probe zur Fokussierung des Laserstrahls gemäß dem vorbestimmten Muster.

15. System nach einem der Ansprüche 13 oder 14, wobei die Messvorrichtung (30) ein Phasenmikroskop ist.

**Claims**

1. A method for the in-depth optical functionalization of a sample (10) made of semiconductor material, comprising:

   - the emission of a laser beam (203) formed by pulses of effective durations between 1 ps and 100 ns, having a wavelength in the transparency spectral band of the material;
   - the focusing of the laser beam in depth in the sample, according to a predetermined pattern (101), the light intensity per pulse in a focal volume of the laser beam being adapted to generate a multiphoton absorption;
   - the measuring of the real part of the refractive index of the sample at each point of the pattern;
   - the controlling of the number of pulses received per pattern point as a function of said measurement of the real part of the refractive index so as to obtain, at each pattern point, a progressive modification of the real part of the refractive index of the material until a relative variation of the real part of the refractive index is greater than $10^{-3}$ in absolute value.

2. The method according to claim 1, wherein the pulses are emitted with a given repetition rate of less than 100 kHz.

3. The method according to any one of the preceding claims, further comprising the relative movement of the laser beam and the sample along said pattern at a given scanning rate.

4. The method according to any one of the preceding claims, wherein the control of the number of received pulses per point of the pattern comprises controlling a pulse repetition rate and/or controlling a scanning rate of the laser beam in the sample and/or controlling a dimension of the focal volume.

5. The method according to any one of the preceding claims, further comprising the controlling of the light intensity per pulse in the focal volume to obtain the progressive modification of the real part of the refractive index of the material.

6. The method according to any one of the preceding claims, wherein the control of the number of pulses comprises:

   - a first step of adjusting the number of pulses received per point of the pattern to achieve a first relative variation of the real part of the refractive index;
   - at least a second step of adjusting the number of pulses received per pattern point to achieve a second relative variation of the real part of the refractive index;
   - an iteration of said second step until the relative variation of the real part of the refractive index greater than or equal to a predetermined value is obtained.

7. The method according to claim 6, wherein the first and second relative change in the real part of the refractive index correspond to the smallest detectable change in the real part of the refractive index.

8. The method according to any one of claims 6 or 7, comprising a gradual increase in the light intensity per pulse in the focal volume, from a predetermined minimum value, during each step.

9. The method according to any one of claims 6 or 7, comprising increasing the light intensity per pulse in the focal volume from a predetermined minimum value upon transition from one step to a subsequent step.

10. The method according to any one of the preceding claims, further comprising a preliminary calibration phase.

11. The method according to any one of the preceding claims, wherein each of the pulses of effective durations between 1 ps and 100 ns is formed by a train of ultrashort pulses of less than 1 ps duration.

12. The method according to any one of the preceding claims, wherein the pattern is determined for the formation of at least one of the following optical elements: waveguide, microlens, diffraction grating, splitter, optical filter, wave plate.

13. A system (100) for the in-depth optical functionalization of a sample (10) made of semiconductor material, comprising:

   - a source (20) for emitting a laser beam formed by pulses of effective durations between 1 ps and 100 ns, having a wavelength in the transparency spectral band of the material;
   - a microscope objective (40) for focusing the laser beam in-depth in the sample according to a predetermined pattern, the light intensity per pulse in a focal volume of the laser beam being adapted for the generation of a multiphoton absorption in the semiconductor material;
   - a measuring device (30) for measuring the real part of the refractive index of the sample at each point of the pattern;
   - a control unit (60) for controlling the number of pulses received per pattern point as a function of said measurement of the real part of the refractive index so as to obtain, at each pattern point, a progressive modification of the real part of the refractive index of the material until a relative variation of the real part of the refractive index greater than $10^{-3}$ in absolute value is obtained.

14. The system according to claim 13, further comprising relative displacement means (50) of the focal volume and the sample in order to focus the laser beam according to the predetermined pattern.

15. The system according to any one of claims 13 or 14, wherein the measuring device (30) is a phase microscope.

FIG.1A

EP 3 475 742 B1

FIG.1B

FIG.1C

FIG.2

EP 3 475 742 B1

**FIG.3**

EP 3 475 742 B1

FIG.4A

FIG.4B

FIG.4C

FIG.4D

401

402

403

2.4 µJ

1.2 µJ

0.6 µJ

30 µm

Largeur (µm)

Energie (µJ)

FIG.5A  FIG.5B  FIG.5C  FIG.5D  FIG.5E

FIG.5F  FIG.5G  FIG.5H  FIG.5I  FIG.5J

FIG.6

EP 3 475 742 B1

Irradiation du matériau à énergie E et nombre de tirs N par site $\left(\begin{array}{l}\text{initialement N = 1}\\\text{E = Emin}\end{array}\right)$ — 711

Variation relative d'indice Δn/n détectable ? — 712

NON    OUI

Incrémentation du nombre de tirs N = N + 1 — 715

Critère sur Δn/n satisfait ? — 713

NON    OUI

N > Nmax ? — 716

STOP — 714

NON    OUI

N = 1 E = E + ΔE — 717

FIG.7A

Seuil de modification

Energie laser

$\Delta n/n$

$10^{-3}$

STOP

1                    5                         10            Nombre de passages

FIG.7B

FIG.8A

FIG.8B

EP 3 475 742 B1

FIG.9A

FIG.9B

EP 3 475 742 B1

FIG.10A

FIG.10B

500 μm

## RÉFÉRENCES CITÉES DANS LA DESCRIPTION

**Documents brevets cités dans la description**

- WO 2008113165 A
- US 20120268939 A

**Littérature non-brevet citée dans la description**

- **K. M. DAVIS et al.** Writing waveguides in glass with a femtosecond laser. *Opt. Letters,* 1996, vol. 21 (21
- **A. MOUSKEFTARAS et al.** Self-limited underdense microplasmas in bulk silicon induced by ultrashort laser pulses. *Appl. Phys. Lett.,* 2014, vol. 105, 191103
- **E. V. ZAVEDEEV et al.** Delocalization of femtosecond laser radiation in crystalline Si in the mid-IR range. *Laser Phys,* 2015, vol. 26, 016101
- **M. LIPSON et al.** Guiding, modulating and emitting light on silicon - challenges and opportunities. *Journal of Lightwave Technology,* 2005, vol. 23 (12
- **O. TOKEL et al.** Laser-Writing deep inside Silicon for 3D Information Processing. *arxiv.org/pdf,* vol. 1409, 2827
- **A. TURNALI et al.** Direct Laser Writing of Volume Fresnel Zone Plates in Silicon. *2015,* 21 Juin 2015
- **J.H. BRUNING et al.** Digital Wavefront Measurement Interferometer for Testing Optical Surfaces and Lenses. *Appl. Optics,* vol. 13 (11), 2633-2703